# EUROPÄISCHE PATENTSCHRIFT

(11) **EP 0 707 545 B1**
(45) Veröffentlichungstag und Bekanntmachung des Hinweises auf die Patenterteilung: **14.05.1997**
(21) Anmeldenummer: 94920982.9
(22) Anmeldetag: 11.07.1994
(51) Int. Cl.: B60T 8/00

(54) **ANTRIEBSSCHLUPFREGELUNG**
TRACTION-CONTROL METHOD
REGULATION ANTIPATINAGE

(30) Priorität: 12.07.1993 DE 4323275
(43) Veröffentlichungstag der Anmeldung: 24.04.1996
(73) Patentinhaber: LUCAS INDUSTRIES PUBLIC LIMITED COMPANY, Solihull, West Midlands B91 3TX (GB)
(72) Erfinder: BACH, Thomas, D-56072 Koblenz (DE); HELBING, Stefan, D-56642 Kruft (DE); KNECHTGES, Josef, D-56727 Mayen (DE); SCHMITT, Hubert, D-56299 Ochtendung (DE)
(74) Vertreter: Schmidt, Steffen J., Dipl.-Ing.
(86) Internationale Anmeldenummer: EP9402260
(87) Internationale Veröffentlichungsnummer: WO9502528

(56) Entgegenhaltungen:
- EP-A- 0 345 753
- EP-A- 0 449 333
- EP-A- 3 008 889
- DE-A- 4 022 471
- GB-A- 2 237 084
- US-A- 4 950 037

## Beschreibung

Die Erfindung betrifft eine sog. Antriebsschlupfregelung (ASR) also ein Verfahren zum Verhindern des Durchdrehens von angetriebenen Rädern eines Fahrzeuges.

Solche ASR-Regelungen werden als auch als TC (Traction Control) bezeichnet.

Die angetriebenen Räder eines Fahrzeuges neigen immer dann zu einem Durchdrehen, wenn das vom Fahrzeugmotor erzeugte Antriebsmoment am Rad größer ist als das aufgrund des momentanen Reibbeiwertes über die Räder auf die Straße übertragbare Moment.

Ähnlich wie bei der blockiergeschützten Bremsung (ABS) nimmt auch mit steigendem Antriebsschlupf nicht nur das vom Rad auf die Fahrbahn übertragbare Antriebsmoment in Fahrtrichtung nach Überschreiten eines Maximalwertes wieder ab, sondern auch die Seitenführungskraft der Räder sinkt nach Überschreiten eines Maximums auf sehr geringe Werte.

Es sind im Stand der Technik Antriebsschlupfregler bekannt, bei denen zum einen ein Durchdrehen der angetriebenen Räder dadurch verhindert wird, daß die Antriebsleistung des Motors bei Durchdrehneigung eines Rades reduziert wird. Zum anderen sind auch Antriebsschlupfsregler bekannt, bei denen im Falle einer Durchdrehneigung eines angetriebenen Rades die Bremse dieses Rades automatisch betätigt wird, um die Traktion dieses Rades zu verbessern.

Im Stand der Technik ist in der Regel vorgesehen, beide angetriebenen Räder einer Achse jeweils aufgrund ihres eigenen Drehverhaltens hinsichtlich der Traktion zu regeln.

Zeigt dabei z.B. das eine Rad der Achse deutlich vor dem anderen Rad eine Durchdrehneigung (weil das eine Rad z.B. auf glatterer Fahrbahn läuft als das andere), so wird der Bremse des zuerst Durchdrehneigung zeigenden Rades Bremsdruck zugeführt. Dies hat bei Verwendung eines Differentialgetriebes für die betreffende Achse zur Folge, daß das andere (noch keine Durchdrehneigung zeigende) angetriebene Rad ein höheres Antriebsmoment auf die Fahrbahn überträgt.

Das zuerst instabil gewordene Rad (also das zuerst eine Durchdrehneigung zeigende Rad) wird bei dieser bekannten Antriebsschlupfregelung so lange gebremst, wie die Drehgeschwindigkeit des Rades dies erforderlich macht. Mit anderen Worten: solange die Drehgeschwindigkeit des Rades über einem vorgegebenen Schwellenwert liegt, wird es abgebremst, um ein Durchdrehen zu verhindern.

Zeigt dann auch das andere, zunächst noch stabile Rad, eine Durchdrehneigung, dann wird auch dieses Rad entsprechend gebremst.

Die DE 40 22 471 A1 beschreibt eine Antriebsschlupfregelung zur Erhöhung der Fahrstabilität, bei der das momentan einen höheren Reibwert aufweisende Antriebsrad ermittelt und die Drehgeschwindigkeit dieses Rades überwacht und durch Bremswirkung stabilisiert wird. Ein in der Radbremse des zweiten angetriebenen Rades derselben Fahrzeugachse vorhandener Bremsdruck wird abgebaut. Die Regelung basiert also vollständig auf dem Drehverhalten des stabilen Rades, dessen Bremsdruck in Abhängigkeit von seiner Drehgeschwindigkeit gesteuert wird.

Der vorliegenden Erfindung liegt das Ziel zugrunde, eine den Fahrer des Fahrzeuges möglichst wenig irritierende (komfortable) Antriebsschlupfregelung bereitzustellen, die mit einem einfachen Regelalgorithmus auskommt und bei der die Fahrzeug-Bauteile möglichst wenig beansprucht werden.

Zunächst liegt der Erfindung folgende Erkenntnis zugrunde:

Bei einer herkömmlichen Antriebsschlupfregelung treten insbesondere bei schnell wechselnden Reibbeiwerten zwischen den Rädern und der Fahrbahn starke Variationen der an den beiden Rädern einer Achse herrschenden Bremsmomente auf und dies führt insbesondere bei einer Fahrzeugachse mit sog. Ausgleichsgetriebe zu einer extremen Belastung der Zahnräder, Lager und Getriebe. Hierdurch wird die Haltbarkeit und die Lebensdauer des Antriebsstranges des Fahrzeuges stark beeinträchtigt.

Bei herkömmlichen Antriebsschlupfregelungen trat eine solche Belastung der Bauteile insbesondere dann auf, wenn beide Räder einer Antriebsachse über ein Differential gekoppelt sind. Gelangt bei einem solchen Fahrzeug zuerst das eine Rad der Achse in einen instabilen Bereich, d.h. es zeigt Durchdrehneigung, dann wird es durch Betätigen seiner Radbremse auf eine geringere Drehgeschwindigkeit heruntergebremst. Dies führt aufgrund des Differentials dazu, daß das andere Rad, welches einen höheren Reibbeiwert aufweist und deshalb noch stabil ist, nun seinerseits ein größeres Antriebsmoment erzeugt und deshalb selbst Gefahr läuft, durchzudrehen. Unter Umständen kann diese Durchdrehneigung des zweiten Rades so hoch sein, daß die Seitenführungsstabilität stark beeinträchtigt ist. Bremst man nun auch dieses zweite, später instabil gewordene Rad, so entstehen die oben genannten hohen verschleißenden Belastungen in der Bremsanlage, der Kupplung und im Getriebe.

Die Erfindung erreicht das oben genannte Ziel bei einer Antriebsschlupfregelung für ein zweispuriges Kraftfahrzeug dadurch, daß dann, wenn eines von zwei angetriebenen Rädern einer Achse des Fahrzeuges einen geringeren Reibbeiwert mit der Fahrbahn hat als das andere Rad dieser Achse und das eine Rad eine Durchdrehneigung zeigt, Bremsdruck an diesem Rad aufgebaut wird, wobei die Drehgeschwindigkeit des anderen Rades gemessen wird und dann, wenn die Drehgeschwindigkeit in bezug auf eine Fahrzeugreferenzgeschwindigkeit einen vorgegebenen Wert überschreitet, der Bremsdruck an dem einen Rad abgebaut oder konstant gehalten wird.

Ein Hauptmerkmal der erfindungsgemäßen Antriebsschlupfregelung besteht also darin, daß dann, wenn eine deutliche Differenz der Reibbeiwerte der beiden angetriebenen Räder einer Achse auftritt, im wesentlichen immer nur der Bremsdruck an einem einzigen der beiden Räder automatisch erhöht wird, und zwar am zuerst instabil werdenden Rad, wobei das Drehverhalten des noch zunächst stabilen Rades gemessen wird und in Abhängigkeit vom zeitlichen Verlauf der Drehgeschwindigkeit des zunächst noch stabilen Rades der Bremsdruck in der Radbremse des zuerst instabilen Rades gesteuert wird. Die gesamte Regelung wird also im wesentlichen auf ein einziges Rad reduziert, nämlich das zuerst instabile Rad, welches auf glatterer Fahrbahn läuft, wobei die wesentlichen Parameter für die Steuerung des Bremsdruckes in diesem zuerst instablien Rad Dreheigenschaften des zunächst noch stabilen Rades sind.

Erfindungsgemäß wird also nicht, wie bisher im Stand der Technik üblich, versucht, das zuerst instabile Rad am Durchdehen zu hindern, vielmehr liegt der Erfindung der Gedanke zugrunde, das auf guter Fahrbahn (mit hohem Reibbeiwert) laufende Rad im optimalen Bereich der Schlupfkurve zu halten und damit eine maximale Traktion und größtmögliche Seitenführungskraft zu gewährleisten.

Die Erfindung ist mit Vorteil sowohl bei zweirad- als auch bei vierradangetriebenen Fahrzeugen einsetzbar, bei letzteren insbesondere dann, wenn kein durchgeschalteter starrer Durchtrieb gegeben ist. In diesem Falle ist insbesondere eine Entlastung der Mitteldifferentialsperre zu verzeichnen.

Nachfolgend wird ein Ausführungsbeispiel der Erfindung anhand der Zeichnung näher erläutert. Es zeigt:
- Fig. 1: den zeitlichen Verlauf der Drehgeschwindigkeiten der beiden angetriebenen Räder derselben Achse eines Fahrzeuges und den zeitlichen Verlauf der sog.Fahrzeugreferenzgeschwindigkeit, wie sie aus der ABS- und der ASR-Regeltechnik bekannt ist;
- Fig. 2: den zeitlichen verlauf des Bremsdruckes in der Radbremse eines ersten Rades, dessen Drehgeschwindigkeit in Fig. 1 mit v₁ bezeichnet ist, und
- Fig. 3: den zeitlichen verlauf des Bremsdruckes in der Radbremse eines zweiten Rades derselben Achse des Fahrzeuges, dessen Drehgeschwindigkeit in Fig. 1 mit v₂ bezeichnet ist.

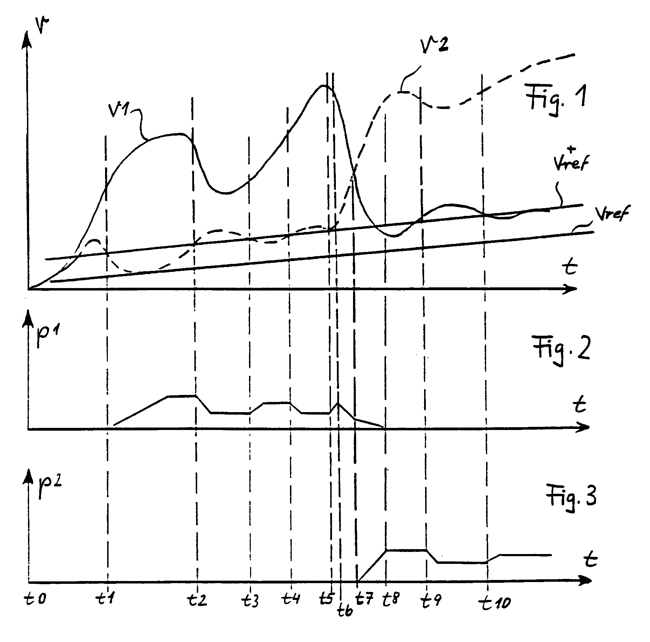

Die Fig. 1, 2 und 3 haben, wie dargestellt, jeweils die gleiche Zeitachse t.

In Fig. 1 ist ein typischer Verlauf der Drehgeschwindigkeiten der beiden angetriebenen Räder einer Antriebsachse eines Fahrzeuges bei einem Anfahrvorgang auf einer inhomogenen Fahrbahn dargestellt. Dabei ist angenommen, daß ein Rad der Achse auf relativ glatter Fahrbahn läuft, nämlich das Rad, dessen Drehgeschwindigkeit in Fig. 1 mit v₁ bezeichnet ist, während das andere Rad auf relativ griffiger Fahrbahn läuft; seine Drehgeschwindigkeit ist in Fig. 1 mit v₂ bezeichnet.

Der erfindungsgemäße ASR-Regelalgorithmus wird nur dann eingesetzt, wenn ein deutlicher Unterschied im Reibbeiwert an den beiden Antriebsrädern erkannt ist. Ein solcher Unterschied der Reibbeiwerte läßt sich z.B. daraus erkennen, daß die Drehgeschwindigkeit des einen Rades in einer vorgegebenen Zeitspanne wesentlich stärker ansteigt als die Drehgeschwindigkeit des anderen angetriebenen Rades derselben Achse des Fahrzeuges. So auch in Fig. 1.

Beim Verlauf der Drehgeschwindigkeiten v₁ und v₂ gemäß Fig. 1 ist angenommen, daß zum Zeitpunkt t₀ der Anfahrversuch beginnt, d.h. der Fahrer des Fahrzeuges kuppelt ein und gibt Gas. Die Drehgeschwindigkeit v₁ des ersten Rades steigt steil an, während die Drehgeschwindigkeit des zweiten Rades v₂ (gestrichelte Linie) nicht so steil ansteigt, sondern zum Zeitpunkt t₁ unter einen Schwellenwert v⁺_{ref} abfällt. Der Schwellenwert v⁺_{ref} unterscheidet sich gemäß Fig. 1 um einen gleichbleibenden Betrag von der als solche bekannten Fahrzeugreferenzgeschwindigkeit v_{ref}. Die in Fig. 1 dargestellte Tatsache, daß zum Zeitpunkt t₁ sich die Drehgeschwindigkeiten v₁ und v₂ der beiden angetriebenen Räder der Achse um mehr als einen vorgegebenen Betrag unterscheiden bzw. der Umstand, daß bei hoher Drehgeschwindigkeit v₁ des ersten Rades die Drehgeschwindigkeit v₂ des zweiten Rades unter den Schwellenwert v⁺_{ref} abfällt, zeigen an, daß das eine Rad (v₁) auf einer wesentlich glatteren Fahrbahn läuft als das andere Rad (v₂). Deshalb wird der nachfolgend beschriebene ASR-Regelalgorithmus eingesetzt.

Zum Zeitpunkt t₁ steigt also die Drehgeschwindigkeit v₁ des ersten Rades weiter an, während die Drehgeschwindigkeit v₂ des zweiten Rades unter den Schwellenwert v⁺_{ref} abfällt. Letzteres zeigt an, daß das zweite Rad (v₂) stabil läuft.

Gemäß Fig. 2 wird zum Zeitpunkt t₁ der Bremsdruck p₁ in der Radbremse des ersten Rades erhöht. Wie Fig. 3 zeigt, wird in der gesamten Zeitspanne zwischen t₁ und t₇ der Bremsdruck p₂ in der Radbremse des zweiten Rades (v₂) nicht erhöht.

Es wird allerdings der Verlauf der Drehgeschwindigkeit v₂ des zweiten Rades (gestrichelte Linie von Fig. 1) genau beobachtet und in Abhängigkeit von der Drehgeschwindigkeit v₂ in bezug auf den Schwellenwert v⁺_{ref} wird der Bremsdruck p₁ in der Radbremse des ersten Rades gemäß Fig. 2 gesteuert.

Mit der im Anschluß an den Zeitpunkt t₁ erfolgenden Bremsung des zuerst durchdrehenden Rades (v₁) wird auf der Seite des Achsdifferentials, auf welcher das erste Rad angeordnet ist, die Gegenkraft erhöht und deshalb wird dem zweiten Rad, welches auf der anderen Seite des Achsdifferentials angeordnet ist, ein höheres Antriebsmoment übertragen, d.h. das zweite Rad gelangt in einen optimalen Bereich der Reibbeiwert/Schlupf-Kurve.

Gemäß Fig. 2 wird der Bremsdruck p₁ in der Radbremse des ersten Rades bis zu einem Maximalwert erhöht und dann bis zum Zeitpunkt t₂ konstant gehalten. Zum Zeitpunkt t₂ hat die Drehgeschwindigkeit v₂ des zweiten Rades wieder den Schwellenwert v⁺_{ref} erreicht (überschritten) und es wird deshalb im Anschluß an den Zeitpunkt t₂ der Bremsdruck p₁ gemäß Fig. 2 abgesenkt und bei Erreichen eines vorgegebenen Wertes konstant gehalten, und zwar bis zum Zeitpunkt t₃. Zum Zeitpunkt t₃ unterschreitet die Drehgeschwindigkeit v₂ des zweiten Rades wieder den Schwellenwert v⁺_{ref} und analog dem oben beschriebenen Vorgang zum Zeitpunkt t₁ wird nunmehr wieder der Bremsdruck p₁ in der Radbremse des ersten Rades erhöht.

Zum Zeitpunkt t₄ überschreitet die Drehgeschwindigkeit v₂ des zweiten Rades wieder den Schwellenwert v_{ref} und entsprechend wird zu diesem Zeitpunkt der Bremsdruck p₁ in der Radbremse des ersten Rades wieder reduziert und anschließend konstant gehalten (vgl. Fig. 2). Immer dann, wenn der Bremsdruck p₁ in der Bremse des ersten Rades reduziert wird, wird aufgrund des Differentialgetriebes das auf das zweite Rad vom Antrieb ausgeübte Drehmoment ebenfalls reduziert, so daß die Drehgeschwindigkeit des zweiten Rades entsprechend Fig. 1 wieder in den optimalen Bereich um den Schwellenwert v⁺_{ref} herum gelangt.

Eine solche Reduzierung des Bremsdruckes p₁ hat zwar zur Folge, daß das erste Rad im Zeitintervall zwischen t₄ und t₅ noch mehr durchdreht, jedoch gelangt das zweite Rad, wie vorstehend erläutert ist, immer wieder in den optimalen Schlupfbereich. Unter den beschriebenen Bedingungen wird das zweite Rad überhaupt nicht gebremst, vgl. Fig. 3, die Zeitspanne t₀ bis t₇, in der der Radbremse des zweiten Rades überhaupt kein Bremsdruck p₂ zugeführt wird.

Die Fig. 1, 2 und 3 illustrieren weiterhin den Fall, daß sich die Fahrbahnverhältnisse abrupt dahingehend ändern, daß das erste Rad (v₁), welches zunächst auf einer sehr glatten Fahrbahn gelaufen ist, zum Zeitpunkt t₅ auf eine sehr griffige Fahrbahn gerät, während zum unmittelbar anschließenden Zeitpunkt t₆ das zweite Rad, welches zunächst auf einer sehr griffigen Fahrbahn gelaufen ist, nunmehr auf eine sehr glatte Fahrbahn gerät. Ein solcher "schachbrettartiger" Reibwertwechsel zwischen den Rädern und der Fahrbahn ist der schwierigste Extremfall einer ASR-Regelung.

Wie Fig. 1 zeigt, fällt die Drehgeschwindigkeit v₁ des ersten Rades ab dem Zeitpunkt t₅ stark ab, während die Drehgeschwindigkeit v₂ des zweiten Rades ab dem Zeitpunkt t₆ stark ansteigt. Dies erklärt sich unmittelbar aus den vorstehend vorausgesetzten Reibwertverhältnissen. Der Rechner der ASR-Anlage erkennt aus dem abrupten gegensinnigen Wechsel der Drehgeschwindigkeiten v₁ und v₂, daß sich die Reibwerte zwischen den Rädern und der Fahrbahn drastisch geändert haben. In einer solchen Situation muß der Bremsdruck schnellstmöglich von dem einen Rad in die Radbremse des anderen Rades transferiert werden, hier also vom ersten Rad zum zweiten Rad, wie ein Vergleich der Fig. 2 und 3 zeigt. Eine solche extreme, schachbrettartige Änderung der Reibbeiwerte vom einen Rad zum anderen Rad ist die einzige Situation, wo es beim erfindungsgemäßen Regelalgorithmus zweckmäßig ist, in den Bremsen beider Räder Druck zu akzeptieren, dies ist gemäß den Fig. 2 und 3 in der Zeitspanne zwischen t₇ und t₈ der Fall. Der hier vorgesehene gleichzeitige Druckabbau im ersten Rad und der Druckaufbau im zweiten Rad sind insoweit vorteilhaft, als sie einen weichen Übergang und einen möglichst geringen Beschleunigungseinbruch ermöglichen. Auch aus der Sicht der Schonung des Materials (Lebensdauer der Bauteile) ist der kurze Zeitabschnitt t₇ bis t₈ mit gleichzeitiger Bremsung auf beiden Seiten nicht schädlich, da in dem zuvor gebremsten ersten Rad nur noch ein sehr geringer abnehmender Druck gegeben ist, während in dieser Zeitspanne der Druckaufbau im zweiten Rad auch noch keine sehr hohen Werte erreicht hat. Im Anschluß an den Zeitpunkt t₇ ist, umgekehrt als oben beschrieben, nunmehr das zweite Rad das instabile, so daß der Bremsdruck p₂ in der Radbremse des zweiten Rades gemäß Fig. 3 in Abhängigkeit davon gesteuert wird, wie sich die Drehgeschwindigkeit v₁ des ersten Rades zu dem Schwellenwert v⁺_{ref} verhält. Die Regelung ist völlig analog wie oben beschrieben, nur mit vertauschten Rädern.

## Patentansprüche

1. Verfahren zum Verhindern des Durchdrehens von angetriebenen Rädern eines Kraftfahrzeuges, bei dem dann, wenn ein erstes von zwei angetriebenen Rädern einer mit einem Achsdifferential versehenen Achse des Fahrzeuges einen geringeren Reibbeiwert mit der Fahrbahn hat als ein zweites Rad dieser Achse und das erste Rad eine Durchdrehneigung zeigt, nicht aber das zweite Rad, Bremsdruck an dem ersten Rad aufgebaut wird und anschließend das Drehverhalten des zweiten, keine Durchdrehneigung zeigenden Rades gemessen und so ausgewertet wird, daß dann, wenn die Drehgeschwindigkeit des zweiten Rades einen Schwellenwert (v⁺_{ref}) überschreitet, der Bremsdruck an dem ersten Rad zeitweise abgebaut, und dann, wenn die Drehgeschwindigkeit des zweiten Rades den Schwellenwert (v⁺_{ref} ) unterschreitet, der Bremsdruck an dem ersten Rad zeitweise aufgebaut wird.

## Claims

1. A method for preventing the driven wheels of an automotive vehicle from spinning, where whenever a first wheel of two driven wheels of an axle of the vehicle provided with an axle differential has a lower friction coefficient with the road surface than a second wheel of that axle, and the first wheel shows a spinning tendency, but not the second one, a brake pressure is built up at the first wheel, and then the rotational behaviour of the second wheel which does not show a spinning tendency is measured and evaluated so that whenever the rotational speed of the second wheel exceeds a threshold value (v⁺_{ref}), the brake pressure at the first wheel is temporarily relieved, and whenever the rotational speed of the second wheel drops below the threshold value (v⁺_{ref}), the brake pressure at the first wheel is temporarily built up.

## Revendications

1. Procédé pour empêcher le patinage de roues motrices d'un véhicule, selon lequel, lorsqu'une première de deux roues motrices d'un essieu du véhicule pourvu d'un différentiel présente un coefficient de frottement plus faible avec la chaussée qu'une deuxième roue de cet essieu et lorsque la première roue présente une tendance à patiner, mais pas la deuxième roue, une pression de freinage est engendrée sur la première roue et, immédiatement après, le comportement en rotation de la deuxième roue ne présentant aucune tendance au patinage est mesuré et exploité de la façon que lorsque la vitesse de rotation de la deuxième roue dépasse une valeur de seuil (v+ref), la pression de freinage sur la première roue est temporairement diminuée et lorsque la vitesse de rotation de la deuxième roue reste en dessous de la valeur de seuil (v+ref), la pression de freinage sur la première roue est temporairement augmentée.
